**Europäisches Patentamt**

**European Patent Office**

**Office européen des brevets**

(19)

(11) Veröffentlichungsnummer : **0 468 956 B1**

(12) # EUROPÄISCHE PATENTSCHRIFT

(45) Veröffentlichungstag der Patentschrift :
20.01.93 Patentblatt 93/03

(51) Int. Cl.⁵ : **F16C 33/20**

(21) Anmeldenummer : **89905109.8**

(22) Anmeldetag : **26.04.89**

(86) Internationale Anmeldenummer :
**PCT/EP89/00454**

(87) Internationale Veröffentlichungsnummer :
**WO 90/12965 01.11.90 Gazette 90/25**

(54) **WARTUNGSFREIES GLEITLAGER UND EIN VERFAHREN FÜR SEINE HERSTELLUNG.**

(43) Veröffentlichungstag der Anmeldung :
**05.02.92 Patentblatt 92/06**

(45) Bekanntmachung des Hinweises auf die
Patenterteilung :
**20.01.93 Patentblatt 93/03**

(84) Benannte Vertragsstaaten :
**AT BE CH DE FR GB IT LI LU NL SE**

(56) Entgegenhaltungen :
**EP-A- 0 217 462
DE-A- 2 401 804
DE-A- 3 021 369
DE-A- 3 534 242
FR-A- 1 354 161
Fertigungstechnik und Betrieb 23 (1973), Heft
1, S. 48 und 49
Adhesives Age, Februar 1967, S. 30 - 34**

(73) Patentinhaber : **Norton Pampus GmbH
Am Nordkanal 37-43
W-4156 Willich 3 (DE)**

(72) Erfinder : **HARIG, Friedrich
Knickelsdorf 69
W-4156 Willich 3 (DE)**
Erfinder : **PETIT, Dominique
Rue de Housse 60
B-4512 Blégny (BE)**

(74) Vertreter : **Patentanwaltsbüro Cohausz &
Florack
Schumannstrasse 97
W-4000 Düsseldorf 1 (DE)**

## Beschreibung

Gegenstand der vorliegenden Erfindung ist ein neues mehrschichtiges wartungsfreies Gleitlager.

Wartungsfreie Gleitlager, die aus einem Metallträger und einer Kunststoffschicht bestehen, sind z.B. aus der Offenlegungsschrift DE-A-3 534 242 und der EP-A-0 217 462 bekannt. Solche Mehrschichtgleitlager bestehen aus einer Kombination eines mit einer Rauhgrundschicht versehenen Metallträgers aus Stahl, Bronze oder einer hochfesten Aluminiumlegierung und einer Gleitschicht aus einer Matrix aus Polytetrafluorethylen. Die Rauhgrundschicht besteht aus einer porös aufgesinterten Bronzeschicht, Eisenschicht oder Schicht einer Aluminiumlegierung. Diese Schicht bildet dann das Verankerungsmaterial für die in Form einer Paste aufzubringende Polytetrafluorethylenschicht bzw. eine Schicht, die aus dessen Copolymeren besteht. Die hochviskose Paste wird festgewalzt und gesintert.

Nachteilig bei dem genannten Gleitlager ist seine für viele Anwendungen nicht ausreichende Lebensdauer.

Sofern in der Paste Bronzepartikel eingelagert sind, um die für das Lager wichtige Wärmeleitfähigkeit des Kunststoffes zu verbessern, besteht die Gefahr, daß bei der Herstellung die äußere Schicht oxydiert. Ein solches Lagermaterial'ist auch nicht inert. Insbesondere besteht die Gefahr der Zerstörung durch Säuren. Ferner kann es beim Aufbringen der Paste zu einer Entmischung kommen.

Aus Fertigungstechnik und Betrieb 23 (1973), Heft 1, Seiten 48 bis 49, ist eine Folienbeschichtung mittels herkömmlichen Polytetrafluorethylens bekannt. Da dieses Material gegenüber allen Klebstoffen völlig inert ist, wird die Folie zunächst klebfähig gemacht. D.h. die Polytetrafluorethylenfolien können nicht in der Weise auf einen Träger aufgebracht werden, daß sie dort allein durch physikalische Adhäsionskräfte festgehalten werden. Es ist vielmehr erforderlich,. die Folien mittels eines Klebers zu befestigen. In diesem Falle hängt demnach die Temperaturbelastbarkeit nicht mehr nur von der Art der Folie, sondern auch von dem verwendeten Kleber ab.

Die DE-A-2 401 804 betrifft ein Verbundlagerelement, dessen Laufschicht im wesentlichen aus einem ungefüllten Kunststoff besteht. Hierfür werden Polyarylensulfide, Epoxidharze, Polyamidharze, Polyesterharze, Phenoxyharze, Polyimidharze, Polyamid-imid-Harze, Polypropylenharze und Polysulfonharze verwendet. Auch diese Kunststoff-Folien werden entweder direkt, oder mit Hilfe von geeigneten Klebstoffen an der Metallfläche befestigt. Außerdem wird empfohlen, auf die Kunststoffe einen dünnen Film an Schmieröl aufzubringen.

In der FR-A-1 354 161 wird eine aus Tetrafluorethylen bestehende mit Molybdändinsulfid gefüllte Beschichtung dargestellt. In Adhesives Age, Februar 1967, Seiten 30 bis 34, werden ebenfalls Polytetrafluorethylen beschichtete Metalle erwähnt. Jedoch wird das Polytetrafluorethylen chemisch behandelt, so daß durch Epoxidgruppen eine Verbindung mit dem Metallträger hergestellt wird. Ein direktes Auftraben wird nur für FEP für möglich gehalten. Es wird ausdrücklich betont, daß dieses Material thermoplastisch ist und im Gebensatz zu Tetrafluorethylen ohne zusätzliche Verbindungsschicht direkt auf Metall aufgetragen werden kann.

Schließlich sei darauf hingewiesen, daß aus der DE-A-3 021 369 aus modifizierten Tetrafluorethylenpolymerisaten bestehende körnige, rieselfähige Pulver bekannt sind. Es handelt sich hier insbesondere um ein Copolymerisat aus Perfluoralkylvinylether der Formel: $CF_2 = CF - OR_f$, worin $R_f$ einen Perfluorethyl- Perfluorn-propyl- oder Perfluor-n-butyl-Rest bedeutet, und Tetrafluorethylen. Diese Pulver werden für die Ram-Extrusion eingesetzt, da sie sich aufgrund ihres Schüttgewichts und ihrer Rieselfähigkeit besonders gut für die automatische Dosierung eignen. Eine Eignung dieses Materials für die Beschichtung von Metallen oder anderen Materialien wird nicht erwähnt.

Aufgabe der Erfindung ist es, ein wartungsfreies Gleitlager zu schaffen, das die genannten Nachteile nicht hat.

Die Lösung besteht darin, daß das Gleitlager aus einem Metallträger und einer unmittelbar darauf aufgebrachten, aus einem Copolymerisat aus Perfluoralkylvinylether der Formel: $CF_2 = CF - O - R_f$, worin $R_f$ einen Perfluorethyl-, Perfluor-n-propyl- oder Perfluor-n-butyl-Rest bedeutet, und Tetrafluorethylen bestehenden Schicht, die entweder die Gleitschicht oder eine Zwischenschicht, auf welcher eine Gleitschicht aus Kunststoff aufgebracht ist, besteht.

Die Schicht aus einem Copolymerisat aus Perfluoralkylvinylether und Tetrafluorethylen weist eine Dicke auf, die für eine Nacharbeitung ausreicht. Diese kann bis zu 1,5 mm betragen. Die Schicht wird unmittelbar auf die glatte oder aufgerauhte Oberfläche des Metallträgers aufgebracht. Das Aufbringen geschieht in der Weise, daß die Copolymerisatschicht flächig auf den Metallträger aufgedrückt wird, bis die Adhäsionskräfte ausreichend stark sind, um sie auf dem Metallträger festzuhalten. Eine Besonderheit der Erfindung ist somit darin zu sehen, daß eine aus einem Copolymerisat aus Perfluoralkylvinylether und Tetrafluorethylen bestehende Schicht direkt auf einen Metallträger aufgebracht werden kann. Diese Schicht kann entweder direkt als Gleitschicht dienen oder als Zwischenschicht eingesetzt werden, auf welcher insbesondere Polytetrafluorethylen, polyimid oder polyetheretherketon (PEEK) gut haften. Das heißt es ist nicht erforderlich, die Copolymerisate aus Perfluoralkylvinylether und Tetrafluorethylen klebfähig zu machen oder mittels eines Klebers zu befestigen. Insbesondere die Temperaturbelastbarkeit ist daher nicht mehr von dem verwendeten Kleber abhängig.

Als Metallträger kommt vorzugsweise Stahl in Betracht. Als-Material für die auf der Schicht aus einem Copolymerisat aus Perfluoralkylvinylether und Tetrafluorethylen aufgebrachte Gleitschicht sind Kunststoffe, insbesondere Polytetrafluorethylen, polyimid oder polyetheretherketon (PEEK) geeignet.

Der Schicht aus einem Copolymerisat aus Perfluoralkylvinylether und Tetrafluorethylen und/oder der darauf aufgebrachten Gleitschicht aus Kunststoff können zur Verstärkung und/oder zur Verbesserung der Wärmeleitfähigkeit und/oder der Verschleißeigenschaften ein oder mehrere Füllstoffe zugegeben werden. Je nach Zielsetzung werden insbesondere Kohle, Aluminiumoxid, Keramikwerkstoffe, Glas, Bronze, Molybdändisulfid oder Siliziumkarbid (Gewebe, Pulver, Kugeln, Fasern) eingelagert.

Durch Siliziumkarbidpartikel werden gute Wärmeleiteigenschaften erreicht, die nicht die Gefahr der Oxidation bei der Herstellung mit sich bringen. Die Siliziumkarbidpartikel sind außerdem säurebeständig und billig. Sie sind auch leichter als Metallpartikel, insbesondere Bronze, so daß bei der Herstellung der Schicht aus einem Copolymerisat aus Perfluoralkylvinylether und Tetrafluorethylen nicht die Gefahr des Entmischens besteht. An der Lagerseite dagegen sollten solche Füllstoffe eingelagert werden, die die Verschleißeigenschaften des Lagers verbessern. Bei der Erfindung läßt sich ein Füllstoffanteil von 1 bis 40 Vol.-% verwirklichen, weil der Füllstoff nicht wie beim bisherigen Stand der Technik eingewalzt werden braucht, sondern in der Schicht aus einem Copolymerisat aus Perfluoralkylvinylether und Tetrafluorethylen bereits vorhanden ist. Besonders bevorzugt werden 5 bis 30 Vol.-%. Die Dicke der Schicht aus einem Copolymerisat'aus Perfluoralkylvinylether und Tetrafluorethylen (bis zu 1,5 mm) ist sehr genau einstellbar.

In Versuchen hat das Gleitlager bei Dauerbetrieb Temperaturen bis 260 °C, je nach verwendetem Material, standgehalten, ohne daß es zum Ablösen der Schicht aus einem Copolymerisat aus Perfluoralkylvinylether und Tetrafluorethylen gekommen ist. Kurzzeitige höhere Temperaturbelastungen überstand das Gleitlager ohne Schäden.

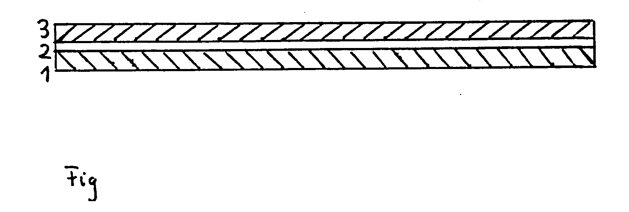

Der Aufbau des erfindungsgemäßen Gleitlagerstoffes ist in der Figur dargestellt. Hierbei ist die Metallschicht mit 1 bezeichnet, während 2 die Schicht aus einem Copolymerisat aus Perfluoralkylvinylether und Tetrafluorethylen und 3 die darauf aufgebrachte Schicht aus Kunststoff bezeichnen.

Durch die nachfolgenden Versuche wird die vorliegende Erfindung näher erläutert.

## Beispiel 1

Versuche mit Polytetrafluorethylen und geätztem Metallträger

Eine Stahlplatte als Metallträger wurde beschichtet.

| | |
|---|---|
| Gleitschicht: | PTFE + Gewebe aus rostfreiem Stahl + Glas + Graphit |
| Stärke der Gleitschicht: | 0,48 mm |

| | |
|---|---|
| Temperatur der beheizten Platte: | 375 - 385 °C |
| Druck der beheizten Platte: | 0,6 bis 1,0 MPa |
| Zwischenschicht: | TFM |
| Stärke der Zwischenschicht vor Beschichtung: | 0,25 mm |
| Stärke der Zwischenschicht nach Beschichtung: | ca. 0,20 mm |

Ergebnis des Scherkrafttests:
$\tau$ = 106 N/cm$^2$ bei Raumtemperatur
$\tau$ = 70 N/cm$^2$ bei 200° C

**Beispiel 2**

Versuche mit geätztem und nicht geätztem Metallträger

```
Stahlplatte als Metallträger
Stärke des Musters vor  Beschichtung:     1,10 mm
Stärke des Musters nach Beschichtung:     1,00 mm
                                               o
Temperatur der beheizten Platte:          290  C
Druck der beheizten Platte:               0,6 -1,0 MPa
Eingesetzte Zwischenschicht:              ETFE
```

Gleitschicht wie in Beispiel 1

Ergebnisse der Scherkraftteste:

| Temperatur | geätzt $(N/cm^2)$ | nicht geätzt $(N/cm^2)$ |
|---|---|---|
| Raumtemp. | 133 | 91 |
| 100 °C | 125 | 77 |
| 150 °C | 107 | 62 |
| 200 °C | 58 | 26 |

**Beispiel 3**

```
Stahlplatte als Metallträger
Gleitschicht:                       PTFE mit 35 % Kohle gefüllt
                                    als Folie
Dicke:                              0,5   mm
Zwischenschicht:                    TFM mit 30 % SiC
Dicke:                              0,25 mm
                                           o
Temperatur der beheizten Platte:    390  C
Druck der beheizten Platte:         0,2 MPa
```

Ergebnis des Scherkrafttests:

Kein Ablösen der Folie, Folie zerreißt.

**Beispiel 4**

```
Stahlplatte als Metallträger
Gleitschicht:                          TFM + 25 % Glas + 5 % Graphit
                                       direkt auf Stahl gepreßt

Dicke:                                 0,25 mm
Zwischenschicht:                       keine
Temperatur der beheizten Platte:       380 °C
Druck der beheizten Platte:            0,2 MPa
```

Ergebnis des Scherkrafttests:

Bei Raumtemperatur:     $\tau = 1500$ N/cm$^2$
Bei 100° C:             $\tau = 1080$ N/cm$^2$
Bei 150° C:             $\tau = 220$ N/cm$^2$

**Beispiel 5**

```
Stahlplatte als Metallträger
Gleitschicht:                          Polyimid
Dicke:                                 0,125 mm
Zwischenschicht:                       TFM (wie in Beispiel 1)-Folie
Dicke:                                 0,25 mm
Temperatur der beheizten Platte:       395 °C
Druck der beheizten Platte:            5,0 MPa
```

Ergebnis des Scherkrafttests:

Keine Ablösung, Folie zerreißt.

**Beispiel 6**

Prüfbedingungen:

| | |
|---|---|
| Probengröße: | $25 \times 25 \text{ mm}^2$ |
| Abzugskraft: | 0,1 kg |
| Temperaturverlauf: | je Stufe 5 °C steigend |
| | 3 min. steigende Temperatur |
| | 3 min. Temperatur haltend |
| Gleitschicht: | PTFE + Bronzegewebe |
| Zwischenschicht: | TFM-Folie |
| Herstellung der Probe: | Gleit- und Zwischenschicht wurden |
| | auf ein Blech (0,5 mm chromatiert) |
| | mit 3 t Preßdruck aufgedrückt. |
| Ergebnis des Schertests: | bei 410 °C keine Proben abgefallen |

In den Beispielen bedeuten:

PTFE = Polytetrafluorethylen

TFM = modifiziertes Polytetrafluorethylen (= Copolymerisat aus Perfluoralkylvinylether und Tetrafluorethylen gemäß der Erfindung)

ETFE = Copolymerisat aus Ethylen und Tetrafluorethylen. Es handelt sich hier um ein thermoplastisches Fluorpolymer

PFA = Copolymerisat aus perfluorvinylether und Tetrafluorethylen gemäß der Erfindung. Dieses Produkt ist chemisch ähnlich dem TFM. Es ist jedoch infolge seines höheren Ethergehalts thermoplastisch.

**Patentansprüche**

1. Wartungsfreies Gleitlager, bestehend aus einem Metallträger und einer unmittelbar darauf aufgebrachten, aus einem Copolymerisat aus Perfluoralkylvinylether der Formel:

$$CF_2 = CF - O - R_f,$$

worin $R_f$ einen Perfluorethyl-, Perfluor-n-propyl- oder Perfluor-n-butyl-Rest bedeutet, und Tetrafluorethylen (PFA oder TFM) bestehenden Schicht, die entweder die Gleitschicht oder eine Zwischenschicht, auf welcher eine Gleitschicht aus Kunststoff aufgebracht ist, bildet.

2. Gleitlager nach Anspruch 1,
**dadurch gekennzeichnet,** daß die Dicke der Gleitschicht bis zu 1,5 mm beträgt.

3. Gleitlager gemäß einem der Ansprüche 1 oder 2,
**dadurch gekennzeichnet,** daß der Metallträger eine glatte Oberfläche hat.

4. Gleitlager gemäß einem der Ansprüche 1 oder 2,
**dadurch gekennzeichnet,** daß der Metallträger eine aufgerauhte Oberfläche hat.

5. Gleitlager gemäß einem der Ansprüche 1 bis 4,
**dadurch gekennzeichnet,** daß der Mettalträger aus Stahl besteht.

6. Gleitlager nach einem der Ansprüche 1 bis 4,
**dadurch gekennzeichnet,** daß die auf der Schicht aus einem Copolymerisat aus Perfluoralkylvinylether und Tetrafluorethylen aufgebrachte Gleitschicht eine Kunststofffolie ist, die gelocht und/oder luftdurch-

6

lässig ist.

7. Gleitlager gemäß einem der Ansprüche 1 bis 6,
**dadurch gekennzeichnet,** daß die auf der Schicht aus einem Copolymerisat aus Perfluoralkylvinylether und Tetrafluorethylen aufgebrachte Gleitschicht aus Polytetrafluorethylen oder Polyimid oder Polyetherketon (PEEK) besteht.

8. Gleitlager gemäß einem der Ansprüche 1 bis 7,
**dadurch gekennzeichnet,** daß der auf der Schicht aus einem Copolymerisat aus Perfluoralkylvinylether und Tetrafluorethylen aufgebrachten Gleitschicht aus Kunststoff zur Verstärkung und/oder Verbesserung der Wärmeleitfähigkeit und/oder der Verschleißeigenschaften ein oder mehrere Füllstoff(e) zugegeben wird (werden).

9. Gleitlager gemäß Anspruch 8,
**dadurch gekennzeichnet,** daß die Füllstoffe Gewebe, Pulver oder Fasern aus Kohle, Alminiumoxid, Keramikwerkstoffen, Glas, Bronze, Molybdändisulfid oder Siliziumkarbid sind.

10. Gleitlager gemäß einem der Ansprüche 8 oder 9,
**dadurch gekennzeichnet,** daß der Füllstoffanteil 1 bis 40 Vol.-% beträgt.

11. Gleitlager gemäß Anspruch 9,
**dadurch gekennzeichnet,** daß der Füllstoffanteil 5 bis 30 Vol. % beträgt.

12. Gleitlager gemäß Anspruch 1 bis 11,
**dadurch gekennzeichnet,** daß die aus einem Copolymerisat aus Tetrafluorethylen und Perfluoralkylvinylether bestehende Zwischenschicht als Füllstoffe Gewebe, Pulver oder Fasern aus Kohle, Aluminiumoxid, Keramikwerkstoffen, Glas, Bronze, Molybdändisulfid oder Siliziumkarbid enthält.

13. Verfahren zur Herstellung des wartungsfreien Gleitlagers gemäß einem der Ansprüche 1 bis 11,
**dadurch gekennzeichnet,** daß die Folie flächig, unter Druck und Wärmezufuhr mit dem Träger verbunden wird.

14. Verfahren nach Anspruch 13,
**dadurch gekennzeichnet,** daß die Oberfläche des Metallträgers vor dem Aufbringen der Gleitschicht aufgerauht wird.

## Claims

1. A maintenance-free sliding bearing comprising a metal support and a layer which is directly applied thereto and which consists of a copolymer of perfluoroalkyl vinyl ether having the Formula:

$$CF_2 = CF - O - R_f$$

where $R_f$ denotes a perfluoroethyl, perfluoro-n-propyl or perfluoro-n-butyl radical, and tetrafluoroethylene (PFA or TFM), and forms either the sliding layer or an intermediate layer to which a sliding layer of a plastics is applied.

2. A sliding bearing according to claim 1, characterized in that the thickness of the sliding layer is up to 1.5 mm.

3. A sliding bearing according to claims 1 or 2, characterized in that the metal support has a smooth surface.

4. A sliding bearing according to claims 1 or 2, characterized in that the metal support has a roughened surface.

5. A sliding bearing according to one of claims 1 to 4, characterized in that the metal support is made of steel.

6. A sliding bearing according to one of claims 1 to 4, characterized in that the sliding layer applied to the layer of a copolymer of perfluoroalkyl vinyl ether and tetrafluoroethylene is a plastics sheet which is perforate and/or air-permeable.

7. A sliding bearing according to one of claims 1 to 6, characterized in that the sliding layer applied to the layer of a copolymer of perfluoroalkyl vinyl ether and tetrafluoroethylene consists of polytetrafluoroethylene or polyimide of polyether ketone (PEEK).

8. A sliding bearing according to one of claims 1 to 7, characterized in that one or more filler is or are added to the plastics sliding layer applied to the layer of a copolymer of perfluoroalkyl vinyl ether and tetrafluoroethylene, for reinforcement and/or the improvement of thermal conductivity and/or wearing properties.

9. A sliding bearing according to claim 8, characterized in that the fillers are fabrics, powders or fibres of carbon, aluminium oxide, ceramic materials, glass, bronze, molybdenum sulphite or silico carbide.

10. A sliding bearing according to claims 8 or 9, characterized in that the proportion of filler is 1 to 40% by volume.

11. A sliding bearing according to claim 9, characterized in that the proportion of filler is 5 to 30 % by volume.

12. A sliding bearing according to claims 1 to 11, characterized in that the intermediate layer, consisting of a copolymer of tetrafluoroethylene and perfluoroalkyl vinyl ether, contains as fillers fabrics, powders or fibres of carbon, aluminium oxide, ceramic materials, glass, bronze, molybdenum sulphite or silicon carbide.

13. A process for the production of the sliding bearing required no maintenance as set forth in one of claims 1 to 11, characterized in that the sheet is connected over its surface area to the support, under pressure and with the supply of heat.

14. A process according to claim 13, characterized in that the surface of the metal support is roughened before the application of the sliding layer.


**Revendications**

1. Palier lisse constitué d'un support métallique et d'une couche disposée directement dessus et constituée d'un copolymère de perfluoralkylvinyléther de formule : $CF_2 = CF - O - R_f$,
où $R_f$ signifie un reste perfluoréthyle, perfluor-n-propyle ou perfluor-n-butyle, et de tétrafluoréthylène (PFA ou TFM), qui constitue soit la couche de glissement soit une couche intermédiaire sur laquelle est déposée une couche de glissement en matière synthétique.

2. Palier lisse selon la revendication 1,
caractérisé en ce que l'épaisseur de la couche de glissement va jusqu'à 1,5 mm.

3. Palier lisse selon l'une des revendications 1 ou 2,
caractérisé en ce que le support métallique a une surface lisse.

4. Palier lisse selon l'une des revendications 1 et 2,
caractérisé en ce que le support métallique a une surface rendue rugueuse.

5. Palier lisse selon l'une des revendications 1 à 4,
caractérisé en ce que le support métallique est constitué d'acier.

6. Palier lisse selon l'une des revendications 1 à 4,
caractérisé en ce que la couche de glissement déposée sur la couche en un copolymère de perfluoralkylvinyléther et de tétrafluoréthylène est une feuille de matière synthétique qui est perforée et/ou perméable à l'air.

7. Palier lisse selon l'une des revendications 1 à 6,
caractérisé en ce que la couche de glissement déposée sur la couche en un copolymère de perfluoralkylvinyléther et de tétrafluoréthylène est constituée de polytétrafluorétylène ou de polyimide ou de polyéthercétone (PEEC).

8. Palier lisse selon l'une des revendications 1 à 7,
caractérisé en ce qu'une ou plusieurs charges sont ajoutées à la couche de glissement déposée sur la couche en un copolymère de perfluoralkylvinyléther et de tétrafluoréthylène pour le remplacement et/ou l'amélioration de la conductibilité thermique et/ou des caractéristiques d'usure.

9. Palier lisse selon la revendication 8,
caractérisé en ce que les charges sont des tissus, des poudres ou des fibres en carbone, en oxyde d'aluminium, en matériaux céramiques, en verre, en bronze, en sulfure de molybdène ou en carbone de silicium.

10. Palier lisse selon l'une des revendications 8 ou 9,
caractérisé en ce que la teneur en charge est de 1 à 40 % en volume.

11. Palier lisse selon la revendication 9,
caractérisé en ce que la teneur en charge est de 5 à 30 % en volume.

12. Palier lisse selon la revendication 1 à 11,
caractérisé en ce que la couche intermédiaire constituée d'un copolymère de tétrafluoréthylène et de perfluoralkylvinyléther contient comme charges des tissus, des poudres ou des fibres en carbone, en oxyde d'aluminium, en matériaux céramiques, en verre, en bronze, en sulfure de molybdène ou en carbone de silicium.

13. Procédé pour la fabrication du papier lisse selon l'une des revendications 1 à 11,
caractérisé en ce que les feuilles sont reliées en nappes, sous pression et apport de chaleur, au support.

14. Procédé selon la revendication 13,
caractérisé en ce que la surface du support métallique est rendue rugueuse avant le dépôt de la couche de glissement.

Fig